(19) Europäisches Patentamt
European Patent Office
Office européen des brevets

(11) Veröffentlichungsnummer: **0 000 929**
**B1**

(12) # EUROPÄISCHE PATENTSCHRIFT

(21) Anmeldenummer: **78100691.1**

(51) Int. Cl.³: **C 08 L 83/04**

(22) Anmeldetag: **17.08.78**

(54) **Zu Elastomeren vernetzende Massen auf Basis von Polysiloxanen.**

(30) Priorität: **18.08.77 DE 2737303**

(43) Veröffentlichungstag der Anmeldung:
**07.03.79 Patentblatt 79/5**

(45) Bekanntmachung des Hinweises auf die Patenterteilung:
**18.03.81 Patentblatt 81/11**

(84) Benannte Vertragsstaaten:
**BE CH DE FR GB NL**

(56) Entgegenhaltungen:
**DE - A - 1 964 502**
**FR - A - 2 152 908**
**FR - A - 2 347 486**
**GB - A - 1 171 848**

(73) Patentinhaber: **WACKER-CHEMIE GMBH**
**Prinzregentenstrasse 22**
**D-8000 München 22 (DE)**

(72) Erfinder: **Bosch, Erhard, Dr.**
**Brucknerstrasse 43**
**D-8263 Burghausen (DE)**

(72) Erfinder: **Braunsperger, Karl**
**Unterhadermark 86**
**D-8261 Raitenhaslach (DE)**

(72) Erfinder: **Schiller, August, Dr.**
**Birkenweg 7a**
**D-8261 Marktl/Bergham (DE)**

(72) Erfinder: **Louis, Eckhart, Dr.**
**Angererweg 20**
**D-8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 000 929 B1

Courier Press, Leamington Spa, England.

## Zu Elastomeren vernetzende Massen auf Basis von Polysiloxanen

Aus US—PS 36 78 003, W. Kaiser et al., assignor to Wacker-Chemie GmbH, ausgegeben: 18. Juli 1972, wobei diese US—PS der FR—PS 20 74 144 entspricht, sind bereits unter Ausschluß von Wasser lagerfähige, bei Zutritt von Wasser bei Raumtemperatur zu Elastomeren vernetzende Massen aus (1) kondensationsfähige Endgruppen aufweisendem Diorganopolysiloxan, (2) insgesamt mindestens drei über Stickstoff an Silicium gebundene Aminogruppen und/oder über Sauerstoff an Silicium gebundene Oximgruppen je Molekül aufweisender Siliciumverbindung und mindestens einem weiteren Bestandteil (3), der zur Verbesserung der Haftfestigkeit der aus diesen Massen auf Unterlagen erzeugten Elastomeren auf diesen Unterlagen dient und aus mindestens einer Organosiliciumverbindung mit mindestens einer über Kohlenstoff an Silicium gebundener Aminogruppe besteht, bekannt. Bei diesen Massen ist der Bestandteil (3) mindestens ein Silan, also eine monomere Siliciumverbindung, wobei dieses Silan zusätzlich zu mindestens einer über Kohlenstoff an Silicium gebundener Aminogruppe mindestens einen über Sauerstoff an Silicium gebundenen, einwertigen, gegebenenfalls durch eine Amino- oder Alkoxygruppe substituierten Kohlenwasserstoffrest enthält. Gegenüber diesen bekannten Massen haben die erfindungsgemäßen Massen insbesondere den Vorteil, daß sie auch in dickeren Schichten vollständig vernetzen. Die vollständige Vernetzung der erfindungsgemäßen Massen erfolgt in dickeren Schichten auch dann, wenn sie keine Kondensationskatalysatoren, wie Dibutylzinndilaurat, enthalten.

Gegenstand der Erfindung sind unter Ausschluß von Wasser lagerfähige, bei Zutritt von Wasser bei Raumtemperatur zu Elastomeren vernetzende Massen aus (1) kondensationsfähige Endgruppen aufweisendem Diorganopolysiloxan, (2) insgesamt mindestens drei über Stickstoff an Silicium gebundene Aminogruppen und/oder über Sauerstoff an Silicium gebundene Oximgruppen je Molekül aufweisender Siliciumverbindung und mindestens einer (3) Organosiliciumverbindung mit mindestens einer über Kohlenstoff an Silicium gebundenen Aminogruppe als mindestens einem weiteren Bestandteil, dadurch gekennzeichnet, daß mindestens ein Teil von Organosiliciumverbindung (3) mindestens ein Siloxansauerstoffatom enthält und in Mengen von 0,1 bis 20 Gewichtsprozent, bezogen auf das Gesamtgewicht der Masse, enthalten ist.

Die erfindungsgemäßen Massen können aus den gleichen, kondensationsfähige Endgruppen aufweisenden Diorganopolysiloxanen (1) bereitet werden, aus denen auch die bisher bekannten, unter Ausschluß von Wasser lagerfähigen, bei Zutritt von Wasser bei Raumtemperatur zu Elastomeren vernetzenden Massen aus kondensationsfähige Endgruppen aufweisendem Diorganopolysiloxan und insgesamt mindestens drei über Stickstoff an Silicium gebundene Aminogruppen und/oder über Sauerstoff an Silicium gebundene Oximgruppen je Molekül aufweisender Siliciumverbindung bereitet werden konnten. Die zur Herstellung solcher Massen meist verwendeten und auch im Rahmen der Erfindung bevorzugt eingesetzten kondensationsfähige Endgruppen aufweisenden Diorganopolysiloxane (1) können z.B. durch die allgemeine Formel

$$HO(SiR^3_2O)_xH$$

wiedergegeben werden. In dieser Formel bedeutet $R^3$ gleiche oder verschiedene, einwertige, gegebenenfalls substituierte und/oder polymere Kohlenwasserstoffreste und x ist eine ganze Zahl im Wert von mindestens 10. Innerhalb der bzw. entlang den Siloxanketten der vorstehend angegebenen Formel können, was bei derartigen Formeln üblicherweise nicht dargestellt wird, zusätzlich zu den Diorganosiloxaneinheiten ($SiR^3_2O$) noch andere Siloxaneinheiten vorliegen. Beispiele für solche anderen, meist lediglich als Verunreinigungen vorliegenden Siloxaneinheiten sind solche der Formeln $R^3SiO_{3/2}$, $R^3_3SiO_{1/2}$ und $SiO_{4/2}$, wobei $R^3$ jeweils die oben dafür angegebene Bedeutung hat. Die Menge an solchen anderen Siloxaneinheiten als Diorganosiloxaneinheiten beträgt jedoch vorzugsweise höchstens 10 Molprozent, insbesondere höchstens 1 Molprozent, jeweils bezogen auf das Gewicht der Diorganopolysiloxane (1). Die Hydroxylgruppen in der oben angegebenen Formel der kondensationsfähige Endgruppen aufweisenden Diorganopolysiloxane können, falls erwünscht, vollständig oder teilweise durch andere kondensationsfähige Gruppen als Si-gebundene Hydroxylgruppen ersetzt sein. Beispiele für solche anderen kondensationsfähige Gruppen sind insbesondere über Stickstoff an Silicium gebundene Aminogruppen, wie sie weiter unten näher erläutert werden, über Sauerstoff an Silicium gebundene Oximgruppen, wie sie ebenfalls weiter unten näher erläutert werden, Alkoxygruppen mit 1 bis 5 Kohlenstoffatomen und Alkoxyalkylenoxygruppen mit 1 bis 5 Kohlenstoffatomen, wie der Rest der Formel $CH_3OCH_2CH_2O$—.

Beispiele für Kohlenwasserstoffreste $R^3$ sind Alkylreste, wie der Methyl-, Äthyl-, n-Propyl- und Isopropylrest sowie Octadecylreste; Alkenylreste, wie der Vinyl- und Allylrest; cycloaliphatische Kohlenwasserstoffreste, wie der Cyclopentyl- und Cyclohexylrest sowie Methylcyclohexyl- und Cyclohexenylreste; Arylreste, wie der Phenylreste und Xenylreste; Aralkylreste, wie der Benzyl-, beta-Phenyläthyl- und der beta-Phenylpropylrest; sowie Alkarylreste, wie Tolylreste.

Als substituierte Kohlenwasserstoffreste $R^3$ sind Halogenarylreste, wie Chlorphenyl- und Bromphenylreste; und Cyanalkylreste, wie der beta-Cyanäthylrest, bevorzugt.

Beispiele für substituierte polymere und unsubstituierte polymere Kohlenwasserstoffreste $R^3$, wobei

solche polymeren Kohlenwasserstoffreste auch als modifizierende Kohlenwasserstoffreste bezeichnet werden können, sind insbesondere solche, die bei einer Polymerisation von polymerisierbaren Verbindungen mittels freier Radikale in Gegenwart von Diorganopolysiloxanen der allgemeinen Formel

$$HO(SiR_2O)_xH$$

worin x die oben dafür angegebene Bedeutung hat und R gleiche oder verschiedene, einwertige, gegebenenfalls substituierte Kohlenwasserstoffreste bedeutet, gebildet werden. Beispiele für polymerisierbare Verbindungen, die bei einer derartigen, in Gegenwart von Diorganopolysiloxan durchgeführten Polymerisation eingesetzt werden können, sind Vinylacetat, Äthylen, Styrol, Acrylsäure, Methacrylsäure, Acrylsäureester, wie n-Butylacrylat, Methacrylsäureester, wie n-Butylmethacrylat, Acrylnitril und Methacrylnitril, sowie Gemische aus mindestens zwei der genannten Monomeren, wie Gemische aus Vinylacetat und Äthylen.

Insbesondere wegen der leichten Zugänglichkeit sind vorzugsweise mindestens 50% der Anzahl der SiC-gebundenen Reste im Diorganopolysiloxan (1) und damit der Reste $R^3$ in den oben angegebenen Formeln Methylreste.

Bei den kondensationsfähige Endgruppen aufweisenden Diorganopolysiloxanen (1) kann es sich um Homo- oder Mischpolymerisate handeln. Es können Gemische aus verschiedenen, kondensationsfähige Endgruppen aufweisenden Diorganopolysiloxanen verwendet werden.

Die Viskosität der kondensationsfähige Endgruppen aufweisenden Diorganopolysiloxane beträgt zweckmäßig 100 bis 500 000 mPa·s bei 25°C.

Bei der Bereitung der erfindungsgemäßen Massen können als insgesamt mindestens drei über Stickstoff an Silicium gebundene Aminogruppen und/oder über Sauerstoff an Silicium gebundene Oximgruppen je Molekül aufweisende Siliciumverbindungen (2) ebenfalls die gleichen Siliciumverbindungen mit insgesamt mindestens drei über Stickstoff an Silicium gebundenen Aminogruppen und/oder über Sauerstoff an Silicium gebundenen Oximgruppen je Molekül verwendet werden, die auch bisher zur Herstellung von unter Ausschluß von Wasser lagerfähigen, bei Zutritt von Wasser bei Raumtemperatur zu Elastomeren vernetzenden Massen durch Vermischen einer derartigen Siliciumverbindung mit kondensationsfähige Endgruppen aufweisendem Diorganopolysiloxan verwendet werden konnten.

Beispiele für im Rahmen der Erfindung verwendbare Siliciumverbindungen (2) sind somit Aminosilane der allgemeinen Formel

$$R_aSi(NR^1_2)_{4-a}$$

worin R die oben dafür angegebene Bedeutung hat, $R^1$ Wasserstoff oder ein einwertiger, gegebenenfalls substituierter Kohlenwasserstoffrest und a 0 oder 1 ist, und deren höchstens 10 Siliciumatome je Molekül aufweisende Teilhydrolysate.

Die oben angegebenen Beispiele für substituierte und unsubstituierte Kohlenwasserstoffreste R gelten mit Ausnahme das Vinylrests im vollen Umfang auch für die substituierten und unsubstituierten Kohlenwasserstoffreste $R^1$. Weitere Beispiele für Kohlenwasserstoffreste $R^1$ sind der n-Butyl-, sec.-Butyl- und der tert.-Butylrest. Bevorzugt als Reste $R^1$ sind der sec.-Butyl- und der Cyclohexylrest.

Weitere Beispiele für Siliciumverbindungen (2) sind Oximsilane der allgemeinen Formel

$$R_aSi(CN{=}X)_{4-a}$$

worin R und a jeweils die oben dafür angegebene Bedeutung haben und X eine $R^1RC{=}$Gruppe (R und $R^1$ haben jeweils die oben dafür angegebene Bedeutung) oder $R^4C{=}$Gruppe ($R^4$ bedeutet einen zweiwertigen, gegebenenfalls substituierten Kohlenwasserstoffrest) ist, und deren höchstens 10 Siliciumatome je Molekül aufweisende Teilhydrolysate.

Schließlich sind Beispiele für Siliciumverbindungen (2) auch Silane der allgemeinen Formel

$$R_aSi(ON{=}X)_c(NR^1_2)_{4-a-c}$$

worin R, $R^1$ und X jeweils die oben dafür angegebene Bedeutung haben und c durchschnittlich mindestens 0,1, vorzugsweise mindestens 0,5 und höchstens 2,9 ist, wobei die Summe aus a + c höchstens 3 ist.

Einzelne Beispiele für Siliciumverbindungen (2) sind Methyltris-(n-butylamino)-silan, Methyltris-(sec.-butylamino)-silan, Methyltris-(cyclohexylamino)-silan, Methyltris-(methyläthylketoxim)-silan, Methylbis-(methyläthylketoxim)-cyclohexylaminosilan und Methyltris-(acetonoxim)-silan.

Es können Gemische aus verschiedenen Siliciumverbindungen (2), z.B. ein Gemisch aus 1 Mol Methyltris-(cyclohexylamino)-silan und 2 Mol Methyltris-(methyläthylketoxim)-silan, verwendet werden.

Die insgesamt mindestens drei über Stickstoff an Silicium gebundene Aminogruppen und/oder über Sauerstoff an Silicium gebundene Oximgruppen je Molekül aufweisende Siliciumverbindung (2)

wird vorzugsweise in solchen Mengen verwendet, daß insgesamt mindestens drei über Stickstoff an Silicium gebundene Aminogruppen und/oder über Sauerstoff an Silicium gebundene Oximgruppen je kondensationsfähige Endgruppe im Diorganopolysiloxan (1) vorliegen. In der Praxis werden häufig 0,2 bis 15 Gewichtsprozent, meist 1 bis 8 Gewichsprozent, jeweils bezogen auf das Gesamtgewicht der jeweiligen Masse, an Siliciumverbindung (2) eingesetzt.

Als Organosiliciumverbindung (3) mit mindestens einer über Kohlenstoff an Silicium gebundener Aminogruppe und mindestens einem Siloxansauerstoffatom können z.B. auch Verbindungen der allgemeinen Formel

$$(R_3SiO)_3SiCH_2CH_{2-a}(CH_3)_aCH_2\overset{H}{N}CH_2CH_2NH_2$$

worin R und a jeweils die oben dafür angegebene Bedeutung haben, eingesetzt werden. Insbesondere wegen der leichten Zugänglichkeit sind jedoch als Organosiliciumverbindungen (3) solche der allgemeinen Formel

$$Y(OSiR_2)_m(OSiAR)_nDY$$

bevorzugt. In dieser Formel hat R die oben dafür angegebene Bedeutung, A bedeutet gleiche oder verschiedene Reste der Formel

$$-(CH_2)_p[Q_a(CH_2)_p]_pNR^1_2$$

wobei $R^1$ und a jeweils die oben dafür angegebene Bedeutung haben, Q Sauerstoff oder die Gruppierung $-NR^1$ und p eine ganze Zahl im Wert von 1 bis 10 ist, Y gleiche oder verschiedene Reste der Formel

$$-SiA_a(OR^2)_bR_{3-a-b}$$

wobei A, R und a jeweils die oben angegebene Bedeutung haben, $R^2$ Wasserstoff oder gleiche oder verschiedene, gegebenenfalls durch mindestens ein Äthersauerstoffatom unterbrochene, einwertige Kohlenwasserstoffreste, b 0, 1, 2 oder 3 und die Summe von a + b höchstens 3 ist, m 0 oder eine ganze Zahl im Wert von 1 bis 2 000 und n 0 oder eine ganze Zahl im Wert von 1 bis 1 000 bedeutet, mit der Maßgabe, daß mindestens ein Rest A je Organopolysiloxan (3) vorliegt.

Vorzugsweise ist R auch in der Organosiliciumverbindung (3) der Methylrest.

Bevorzugte Beispiele für Reste A sind solche der folgenden Formeln:

$$-(CH_2)_3O(CH_2)_2NH_2,$$

$$-(CH_2)_3NH(CH_2)_2NH_2,$$

$$-(CH_2)_3NH(CH_2)_6NH_2,$$

$$-(CH_2)_4NH(CH_2)_2NH(CH_2)_2NH(CH_2)_2NH(CH_2)_2NH_2 \text{ und}$$

$$-(CH_2)_3NH_2.$$

Wie aus den vorstehenden Formeln ersichtlich, bedeutet $R^1$ in der Gruppierung A vorzugsweise Wasserstoff. $R^1$ muß aber nicht immer Wasserstoff sein, wie durch die Gruppierung

$$-(CH_2)_3NH(CH_2)_2N(CH_3)_2$$

veranschaulicht sei. Wie weiterhin aus den vorstehenden Formeln ersichtlich, können die Werte p in ein und derselben Gruppierung A und damit auch in verschiedenen Gruppierungen A gleich oder verschieden sein.

Grundsätzlich sind als Reste A solche der allgemeinen Formel

$$-(CH_2)_3Q(CH_2)_2NH_2$$

worin Q die oben dafür angegebene Bedeutung hat, bevorzugt.

Vorzugsweise haben die Reste $R^2$ 1 bis 18 Kohlenstoffatome, wobei jedoch der Methyl- und der Äthylrest besonders bevorzugt sind. Das wichtigste Beispiel für einen durch ein Äthersauerstoffatom unterbrochenen Kohlenwasserstoffrest $R^2$ ist der Methoxyäthylenrest.

Vorzugsweise ist m eine ganze Zahl im Wert von 3 bis 1 000. Weiterhin ist bevorzugt, daß in den Verbindungen der allgemeinen formel $Y(OSiR_2)_m(OSiAR)_nOY$ höchstens 100 Einheiten der Formel $R_2SiO$

je Gruppierung a vorliegen.

Beispiele für Organosiliciumverbindungen (3) der bevorzugten Art sind solche der allgemeinen Formel

$$R_3Si(OSiR_2)_{m'}(OSiAR)_nOSiR_3,$$

wobei R, A und n jeweils die oben dafür angegebene Bedeutung haben und m' eine ganze Zahl im Wert von mindestens 3 ist. Die Herstellung solcher Organopolysiloxane ist bekannt, z.B. aus FR—PS 11 84 097, veröffentlicht: 16. Juli 1959, Anmelder: Union Carbide Corporation, und FR—PS 12 97 045, veröffentlicht durch "Bulletin officiel de la Propriété industrielle" Nr. 25 von 1962, Anmelder: Union Carbide Corporation.

Weitere Beispiele für Organosiliciumverbindungen (3) der bevorzugten Art sind solche der allgemeinen Formel

$$R(OR^2)ASi(OSiR_2)_{m'}(OSiAR)_nOSiA(OR^2)R,$$

wobei R, $R^2$, A, m' und n jeweils die oben angegebene Bedeutung haben. Solche Organopolysiloxane können z.B. durch Umsetzung von mindestens einer Verbindung der allgemeinen Formel

$$(R^2O)_2SiAR,$$

wobei A, R und $R^2$ jeweils die oben dafür angegebene Bedeutung haben, mit mindestens einem Organopolysiloxan der allgemeinen Formel

$$HO(SiR_2O)_{m'}H,$$

wobei R und m' jeweils die oben dafür angegebene Bedeutung haben, gegebenenfalls in Gegenwart eines Kondensationskatalysators, wie Natriumhydroxyd oder Dibutylzinndilaurat, unter Abspaltung einer Verbindung der allgemeinen Formel

$$R^2CH$$

hergestellt werden.

Beispiele für Organosiliciumverbindungen (3) der bevorzugten Art sind weiterhin solche der allgemeinen Formel

$$A_{3-b}(R^2O)_bSi(OSiR_2)_{m'}(OSiAR)_nOSi(OR^2)_bA_{3-b}$$

worin R, $R^2$, A, b, m' und n jeweils die oben dafür angegebene Bedeutung haben, mit der Maßgabe, daß mindestens eine Gruppierung A je Molekül vorliegt. Auch die Herstellung solcher Organopolysiloxane ist bekannt, z.B. aus DE—OS 23 39 761 , offengelegt: 21. Februar 1974, Anmelder: Stauffer Chemical Co., und FR—PS 12 94 235, veröffentlicht durch "Bulletin officiel de la Propriété industrielle Nr. 21 von 1962, Anmelder: Dow Corning Corporation.

Selbstverständlich können auch innerhalb der bzw. entlang den Siloxanketten der oben angegebenen Formeln für Organosiliciumverbindungen (3) zusätzlich zu den Diorganosiloxaneinheiten $SiR_2O$ und SiARO noch andere Siloxaneinheiten vorliegen. Beispiele für solche anderen Siloxaneinheiten sind solche der Formeln $RSiO_{3/2}$, $R_3SiO_{1/2}$ und $SiO_{4/2}$, wobei R jeweils die oben dafür angegebene Bedeutung hat. Die Mengen an solchen anderen Siloxaneinheiten als Diorganosiloxaneinheiten beträgt auch in den Organosiliciumverbindungen (3) vorzugsweiss höchstens 10 Molprozent.

Die Organosiliciumverbindungen (3) werden in Mengen von 0,1 bis 20 Gewichtsprozent, insbesondere 0,1 bis 5 Gewichtsprozent, jeweils bezogen auf das Gesamtgewicht der Masse, eingesetzt.

Zusätzlich zu kondensationsfähige Endgruppen aufweisendem Diorganopolysiloxan (1), insgesamt mindestens drei über Stickstoff an Silicium gebundene Aminogruppen und/oder über Sauerstoff an Silicium gebundene Oximgruppen je Molekül aufweisender Siliciumverbindung (2) und Organosiliciumverbindung (3) mit mindestens einer über Kohlenstoff an Silicium gebundener Aminogruppe und mindestens einem Siloxansauerstoffatom können auch bei der Bereitung der erfindungsgemäßen Massen Stoffe mitverwendet werden, die auch bisher bei der Herstellung von unter Ausschluß von Wasser lagerfähigen, bei Zutritt von Wasser bei Raumtemperatur zu Elastomeren vernetzenden Massen aus den Siliciumverbindungen (1) und (2) mitverwendet werden konnten. Beispiele für solche zusätzlich mitverwendbaren Stoffe sind verstärkene Füllstoffe, nicht verstärkende Füllstoffe, Pigmente, lösliche Farbstoffe, Riechstoffe, Organopolysiloxanharze, einschließlich solcher aus $(CH_3)_3SiO_{1/2}$— und $SiO_{4/2}$—Einheiten, organische Harze, wie Polyvinylchloridpulver, Korrosionsinhibitoren, Oxidationsinhibitoren, Hitzestabilisatoren, Lösungsmittel, weitere Mittel zur Verbesserung der Haftung der aus den Massen hergestellten Elastomeren auf den Unterlagen, auf denen die Elastomeren erzeugt wurden, wie die Verbindung der Formel $CH_3Si[O(CH_2)_2NH_2]_2(CH_2)_3O(CH_2)_2NH_2$, Kondensationskatalkysatoren, wie Zinn-

salze oder Organozinnsalze von Carbonsäuren, z.B. Dibutylzinndilaurat oder aliphatische basische Stickstoffverbindungen, z.B. 3-Äthoxypropylamin-1 oder n-Hexylamin, Weichmacher, wie bei Raumtemperatur flüssige, durch Trimethylsiloxygruppen endblockierte Dimethylpolysiloxane oder Phosphorsäureester, wie Trioleylphosphat, schließlich Polyglykole, die veräthert und/oder verestert sein können, einschließlich Organosiloxan-Oxyalkylen-Blockmischpolymerisaten.

Beispiele für verstärkende Füllstoffe, also für Füllstoffe mit einer Oberfläche von mindestens 50 $m^2/g$, sind insbesondere pyrogen erzeugte Siliciumdioxyde, unter Erhaltung der Struktur entwässerte Kieselsäure-Hydrogele und andere Arten von gefälltem Siliciumdioxyd mit einer Oberfläche von mindestens 50 $m^2/g$. Falls erwünscht, können jedoch auch andere Füllstoffe mit einer Oberfläche von mindestens 50 $m^2/g$ anstelle der genannten Siliciumdioxydarten oder gemeinsam mit diesen Siliciumdioxydarten eingesetzt werden. Beispiele für solche anderen Füllstoffe sind Metalloxyde, wie Titandioxyd, Ferrioxyd, Aluminiumoxyd und Zinkoxyd, soweit sie jeweils eine Oberfläche von mindestens 50 $m^2/g$ aufweisen.

Beispiele für nicht verstärkende Füllstoffe, also für Füllstoffe mit einer Oberfläche von weniger als 50 $m^2/g$, sind bzw. können sein Quarzmehl, Diatomeenerde, Kieselkreide, Neuburger Kreide (englisch: Neuburg Chalk), Calciumsilikat, Zirkoniumsilikat, Calciumcarbonat, z.B. in Form von gemahlener Kreide, und calciniertes Aluminiumsilikat sowie pulverförmiges Natriumaluminiumsilikat mit Molekularsiebeigenschaften. Die verstärkenden und die nicht verstärkenden Füllstoffe können hydrophobiert sein, beispielsweise durch Behandlung mit Trimethyläthoxysilan oder Stearinsäure. Falls erwünscht, kann eine solche Behandlung z.B. in einer Kugelmühle durchgeführt worden sein.

Auch faserige Füllstoffe, wie Asbeste und Glasfasern, insbesondere solche mit einer durchschnittlichen Länge von höchstens 0,5 mm, und/oder organische Fasern können mitverwendet werden.

Es können Gemische aus verschiedenen verstärkenden und/oder nicht verstärkenden Füllstoffen verwendet werden.

Zur Bereitung der erfindungsgemäßen Massen können alle Bestandteile der jeweiligen Masse in beliebiger Reihenfolge miteinander vermischt werden. Dieses Vermischen erfolgt zweckmäßig bei Raumtemperatur und unter Ausschluß von Wasser. Falls erwünscht, kann dieses Vermischen aber auch bei höheren Temperaturen erfolgen, z.B. bei einer Temperatur im Bereich von 35°C bis 150°C.

Für die Vernetzung der erfindungsgemäßen Massen reicht der normale Wassergehalt der Luft aus. Die Vernetzung kann, falls erwünscht, jedoch auch bei höheren Temperaturen als Raumtemperatur oder niedrigeren Temperaturen als Raumtemperatur, z.B. bei 5° bis 10°C, und/oder mittels den normalen Wassergehalt der Luft übersteigenden Konzentrationen von Wasser durcheführt werden.

Die aus den erfindungsgemäßen Massen auf den verschiedensten Unterlagen, wie Glas, Porzellan, Steingut, Mörtel, Aluminium, Messing, rostfreiem Stahl, verzinktem Blech, Holz, Papier oder Kunstoffen, wie Polyvinylchlorid, Polyester, Polystyrol oder Polymethylmethacrylat, erzeugten Elastomeren haften auf diesen Unterlagen sehr gut auch ohne Mitverwendung der üblichen Grundiermittel, Die erfindungsgemäßen Massen eignen sich deshalb nicht nur zum Abdichten von Fugen, einschließlich senkrecht verlaufender Fugen, und ähnlichen Leerräumen mit lichten Weiten von z.B. 1 mm bis 50 mm, beispielsweise von Land-, Wasser- oder Luftfahrzeugen sowie von Gebäuden, einschließlich solcher aus Leichtbausteinen oder vorgefertigten Bauteilen. Die erfindungsgemäßen Massen eignen sich vielmehr auch auzgezeichnet als Klebstoffe oder Verkittungsmassen sowie zum Herstellen von Isolierungen elektrischer Leiter und zum Herstellen von Überzügen auf den veschiedensten Unterlagen, wie der klebstoffabweisenden Ausrüstung von Papier und anderen Beschichtungen, wie denjenigen von Metallen, Kunst- und Natursteinen, gewebten oder ungewebten Textilien.

In den folgenden Beispielen beziehen sich alle Angaben von Teilen und Prozentsätzen auf das Gewicht, soweit nichts anderes angegeben ist.

Beispiel 1

Ein Gemisch aus 30 Teilen eines durch Trimethylsiloxygruppen enblockierten Dimethylpolysiloxans mit einer Viskosität von 35 mPa·s bei 25°C, 22 Teilen eines in den endständigen Einheiten je eine Si-gebundene Hydroxylgruppe aufweisenden Dimethylpolysiloxans mit einer Viskosität von 20 000 mPa·s bei 25°C und 36 Gewichtsteilen eines in den endständigen Einheiten je eine Si-gebundene Hydroxylgruppe aufweisenden Dimethylpolysiloxans mit einer Viskosität von 80 000 mPa·s bei 25°C wird mit 8,7 Teilen pyrogen in der Gasphase erzeugtem Siliciumdioxyd (englisch: fume silica) mit einer Oberfläche von 150 $m^2/g$, 4,4 Teilen Methyltris-(cyclohexylamino)-silan und 2 Teilen einer Organosiliciumverbindung mit über Kohlenstoff an Silicium gebundenen Aminogruppen und Siloxansauerstoffatomen vermischt. Die letztgenannte Organosiliciumverbindung wurde durch Umsetzung des Silans der Formel

$$H_2N(CH_2)_2NH(CH_2)_3Si(OCH_3)_3$$

mit einem in den endständigen Einheiten je eine Si-gebundene Hydroxylgruppe aufweisenden Dimethylpolysiloxan mit einer Viskosität von 80 mPa·s bei 25°C hergestellt. Sie bestand gemäß dem NMR-Spektrum aus 16,4 Molprozent Si-gebundenen $CH_3O$-Gruppen, 71 Molprozent Dimethylsiloxan-Einheiten und 12,6 Molprozent Gruppierungen der Formel

$$H_2N(CH_2)_2NH(CH_2)_3\overset{|}{\underset{|}{Si}}O—.$$

Beispiel 2

Die in Beispiel 1 beschriebene Arbeitsweise wird wiederholt mit der Abänderung, daß als Organosiliciumverbindung mit über Kohlenstoff an Silicium gebundenen Aminogruppen und Siloxansauerstoffatomen 2 Teile einer Organosilicumverbindung verwendet werden, die durch Umsetzung des Silans der Formel

$$H_2N(CH_2)_2NH(CH_2)_3Si(OC_2H_5)_2CH_3$$

mit einem in den endständigen Einheiten je eine Si-gebunden Hydroxylgruppe aufweisenden Dimethylpolysiloxan, wobei die Menge der Si-gebundenen Hydroxylgruppen 3,7% betrug, hergestellt wurde. Diese Organosiliciumverbindung bestand gemäß dem NMR-Spektrum aus 0,6 Molprozent Si-gebundenen $C_2H_5O$-Gruppen, 95,4% Dimethylsiloxan-Einheiten und 4 Molprozent Gruppierungen der Formel

$$H_2N(CH_2)_2NH(CH_2)_3\overset{|}{Si}(CH_3)O—.$$

Beispiel 3

Ein Gemisch aus 32,7 Teilen des in den endständigen Einheiten je eine Si-gebundene Hydroxylgruppe aufweisenden Dimethylpolysiloxans mit einer Viskosität von 80 000 mPa·s bei 25°C, 16,3 Teilen des in den endständigen Einheiten je eine Si-gebundene Hydroxylgruppe aufweisenden Dimethylpolysiloxans mit einer Viskosität von 20 000 mPa·s und 19,6 Teilen des durch Trimethylsiloxygruppen endblockierten Dimethylpolysiloxans mit einer Viskosität von 35 mPa·s bei 25°C wird mit 19,6 Teilen calciniertem Aluminiumsilikat, 6,5 Teilen pyrogen in der Gasphase erzeugtem Siliciumdioxyd mit einer Oberfläche von 150 $m^2/g$, 1 Teil pulverförmigem Natriumaluminiumsilikat mit Molekularsiebeigenschaften, 4,2 Teilen Methyltris-(cyclohexylamino)-silan und 2 Teilen der in Beispiel 1 beschriebenen Organosiliciumverbindung mit über Kohlenstoff an Silicium gebundenen Aminogruppen und Siloxansauerstoffatomen vermischt.

Vergleichsversuch $V_1$

Die in Beispiel 1 beschriebene Arbeitsweise wird wiederholt mit der Abänderung, daß keine Organosiliciumverbindung mit über Kohlenstoff an Silicium gebundenen Aminogruppen und Siloxansauerstoffatomen mitverwendet wird.

Vergleichsversuch $V_2$

Die in Beispiel 3 beschriebene Arbeitsweise wird wiederholt mit der Abänderung, daß keine Organosiliciumverbindung mit über Kohlenstoff an Silicium gebundenen Aminogruppen und Siloxansauerstoffatomen mitverwendet wird.

Die gemäß Beispiel 1 bis 3 und auch die gemäß Vergleichsversuch $V_1$ und $V_2$ hergestellten Massen sind unter Ausschluß von Wasser lagerfähig und härten unter der Einwirkung des in der Luft enthaltenen Wasserdampfs zu Elastomeren.

Zur Bestimmung der Haftfestigkeit der Elastomeren auf Unterlagen werden je zwei Stücke der in der folgenden Tabelle angebenen Werkstoffe mittels der Massen miteinander verklebt und die so erhaltenen Verbundstoffe nach der methode ASA (American Standards Association) 116,1—1960 in einer Zerreißmaschine geprüft. Es werden folgende Ergebnisse erhalten:

| Elastomer aus Masse von | Haftfestigkeit in N/$mm^2$ auf | | | |
|---|---|---|---|---|
| | Polyvinylchlorid | Messing | verzinktem Blech | rostfreiem Stahl ($V_2A$) |
| Beispiel 1 | 0,38 | 0,38 | 0,36 | 0,35 |
| Beispiel 2 | 0,37 | 0,37 | 0,39 | 0,40 |
| Beispiel 3 | 0,68 | 0,68 | 0,76 | 0,80 |
| Vergleichs-versuch $V_1$ | 0,0 | 0,13 | 0,0 | 0,29 |
| Vergleichs-versuch $V_2$ | 0,0 | 0,0 | 0,0 | 0,0 |

Vergleichsversuch $V_3$

Die in Beispiel 3 beschriebene Arbeitsweise wird wiederholt mit der Abänderung, daß 2 Teile des Silans der formel

$$H_2N(CH_2)_2NH(CH_2)_3Si(OCH_3)_3$$

anstelle der 2 Teile der in Beispiel 1 beschriebenen Organosiliciumverbindung mit über Kohlenstoff an Silicium gebundenen Aminogruppen und Siloxansauerstoffatomen eingesetzt werden. Die so hergestellte Masse ist unter Ausschluß von Wasser lagerfähig. Unter der Einwirkung des in der Luft enthaltenem Wasserdampfs bildet die Masse jedoch nur eine Haut an der Oberfläche und härtet nicht zu einem Elastomeren. Es war nicht zu erwarten, daß die erfindungsgemäßen Massen auch Abwesenheit von Kondensationskatalysator durchhärten würden, weil sich die erfindungsgemäß verwendeten Organosiliciumverbindungen (3) von den gemäß DE—OS 19 64 502 verwendeten Organosiliciumverbindungen mit über Kohlenstoff an Silicium gebundener Aminogruppe im wesentlichen nur durch die zusätzliche Anwesenheit von Siloxansauerstoff unterscheiden.

**Patentansprüche**

1. Unter Ausschluß von Wasser lagerfähige, bei Zutritt von Wasser bei Raumtemperatur zu Elastomeren vernetzende Massen aus (1) kondensationsfähige Endgruppen aufweisendem Diorganopolysiloxan, (2) insgesamt mindestens drei über Stickstoff an Silicium gebundene Aminogruppen und/oder über Sauerstoff an Silicium gebundene Oximgruppen je Molekül aufweisender Siliciumverbindung und mindestens einer (3) Organosiliciumverbindung mit mindestens einer über Kohlenstoff an Silicium gebundenen Aminogruppe als mindestens einem weiteren Bestandteil, dadurch gekennzeichnet, daß mindestens ein Teil von Organosiliciumverbindung (3) mindestens ein Siloxansauerstoffatom enthält und in Mengen von 0,1 bis 20 Gewichtsprozent, bezogen auf das Gesamtgewicht der Masse, enthalten ist.

2. Massen nach Anspruch 1, dadurch gekennzeichnet, daß sie als Organosiliciumverbindung (3) mindestens ein Organopolysiloxan der allgemeinen Formel

$$Y(OSiR_2)_m(OSiAR)_nOY$$

enthalten, worin R gleiche oder verschiedene, einwertige, gegebenenfalls substituierte Kohlenwasserstoffreste, A gleiche oder verschiedene Reste der Formel

$$—(CH_2)_p[Q_a(CH_2)_p]_pNR^1_2,$$

wobei $R^1$ Wasserstoff oder ein einwertiger, gegebenenfalls substituierter Kohlenwasserstoffrest, Q Sauerstoff oder die Gruppierung —$NR^1$, a 0 oder 1 und p eine ganze Zahl im Wert von 1 bis 10 ist, Y gleiche oder verschiedene Reste der Formel

$$—SiA_a(OR^2)_bR_{3-a-b},$$

wobei A, R und a jeweils die vorstehend dafür angegebene Bedeutung haben, $R^2$ Wasserstoff oder gleiche oder verschiedene, gegebenenfalls durch mindestens ein Äthersauerstoffatom unterbrochene, einwertige Kohlenwasserstoffreste, b 0, 1, 2 oder 3 und die Summe von a + b höchstens 3 ist, m 0 oder eine ganze Zahl im Wert von 1 bis 2 000 und n 0 oder eine ganze Zahl im Wert von 1 bis 1 000 bedeutet, mit der Maßgabe, daß mindestens ein Rest A je Organopolysiloxan (3) vorliegt.

3. Massen nach Anspruch 2 dadurch gekennzeichnet, daß A gleiche oder verschiedene Reste der Formel

$$—(CH_2)_3Q(CH_2)_2NH_2$$

bedeutet, worin Q die oben dafür angegebene Bedeutung hat.

**Revendications**

1. Matières se conservant à l'abri de l'eau et se réticulant en présence d'eau, à la température ambiante, en donnant des élastomères, constituées (1) d'un poly-diorganosiloxane à groupes terminaux condensables, (2) d'un composé du silicium contenant au total, par molécule, au moins trois groupes amino reliés au silicium par l'azote et/ou groupes oximes reliés au silicium par l'oxygène, et (3), comme constituant supplémentaire, éventuellement parmi d'autres, au moins un composé organosilicique renfermant au moins un groupe amino relié au silicium par du carbone, matières caractérisées en ce qu'au moins une partie du composé organosilicique (3) contient au moins un atome d'oxygène siloxanique et est contenue en des quantités de 0,1 à 20% en poids par rapport au poids total de la matière.

2. Matières selon la revendication 1, caractérisées en ce qu'elles contiennent, comme composé organosilicique (3), au moins un polyorganosiloxane répondant à la formule générale

$$Y(OSiR_2)_m(OSiAR)_nOY$$

dans laquelle les R représentent des radicaux hydrocarbonés monovalents, éventuellement substitués, identiques ou différents, les A représentent des radicaux, identiques ou différents, répondant à la formule:

$$—(CH_2)_p[Q_a(CH_2)_p]_pNR^1_2$$

dans laquelle $R^1$ désigne l'hydrogène ou un radical hydrocarboné monovalent éventuellement substitué, Q représente l'oxygène ou un groupement $—NR^1$, a est égal à zéro ou à 1 et p est un nombre entier de 1 à 10, les Y représentent des radicaux identiques ou différents, répondant à la formule:

$$—SiA_a(OR^2)_bR_{3-a-b},$$

dans laquelle A, R et a ont les significations indiquées ci-dessus pour ces symboles, les $R^2$ représentent l'hydrogène ou des radicaux hydrocarbonés monovalents, éventuellement interrompus par au moins un atome d'oxygène d'éther, identiques ou différents, b est égal à zéro, à 1, à 2 ou à 3 et la somme a+ b est au plus égale à 3, m est égal à zéro ou désigne un nombre entier de 1 à 2000 et n est égal à zéro ou désigne un nombre entier de 1 à 1000, avec la condition qu'il y ait au moins un radical A par polyorganosiloxane (3).

3. Matières selon la revendication 2, caractérisées en ce que les A représentent des radicaux, identiques ou différents, répondant à la formule:

$$—(CH_2)_3Q(CH_2)_2NH_2$$

dans laquelle Q a la signification donnée à la revendication 2 pour ce symbole.

**Claims**

1. Compositions that are storable with the exclusion of water and that crosslink at room temperature upon the admission of water to form elastomers, which compositions consist of (1) a diorganopolysiloxane having condensable terminal groups, (2) a silicon compound having, per molecule, a total of at least three amino groups bonded to silicon *via* nitrogen and/or oxime groups bonded to silicon *via* oxygen, and, as at least one further constituent, at least one (3) organosilicon compound having at least one amino group bonded to silicon *via* carbon, characterised in that at least part of the organosilicon compound (3) contains at least one siloxane oxygen atom, and is present in an amount of from 0.1 to 20% by weight, calculated on the total weight of the composition.

2. Compositions according to claim 1, characterised in that they contain, as the organosilicon compound (3), at least one organopolysiloxane of the general formula

$$Y(OSiR_2)_m(OSiAR)_nOY$$

in which R denotes the same or different, monovalent, optionally substituted, hydrocarbon radicals, A denotes the same or different radicals of the formula

$$—(CH_2)_p[Q_a(CH_2)_p]_pNR^1_2,$$

in which $R^1$ denotes hydrogen or a monovalent, optionally substituted, hydrocarbon radical, Q denotes oxygen or the grouping $—NR^1$, a is 0 or 1 and p is an integer having a value of from 1 to 10, Y denotes the same or different radicals of the formula

$$—SiA_a(OR^2)_bR_{3-a-b}$$

in which each of A, R and a have the meanings given above, $R^2$ denotes hydrogen or the same or different, monovalent, hydrocarbon radicals optionally interrupted by at least one ether oxygen atom, b is 0, 1, 2 or 3 and the sum of a and b is not more than 3, m is 0 or an integer having a value of from 1 to 2000 and n is 0 or an integer having a value of from 1 to 1000, provided that at least one radical A is present per organopolysiloxane (3).

3. Compositions according to claim 2, characterised in that A denotes the same or different radicals of the formula

$$—(CH_2)_3Q(CH_2)_2NH_2$$

in which Q has the meaning given above.